# EUROPEAN PATENT APPLICATION

(11) **EP 2 787 612 A1**
(43) Date of publication of application: **08.10.2014**
(21) Application number: 13162015.5
(22) Date of filing: 02.04.2013
(51) Int. Cl.: H02K 21/38, H02K 1/14

(54) **Flux switching modulated pole machine**

(71) Applicant: Höganäs AB (publ), 26383 Höganäs (SE)
(72) Inventor: Atkinson, Glynn, North Shields, Tyne and Wear NE 29 0NH (GB); Washington, Jamie, Sowerby Bridge, Yorkshire HX61NG (GB)

(57) **Abstract**

A stator for a flux switching modulated pole machine, the stator comprising a stator core, a coil, and at least two permanent magnets, the stator core comprising at least four coaxial annular stator core members, each comprising a respective set of radially protruding teeth, the teeth of each annular stator core member being distributed along a circumferential direction, wherein the annular stator core members are axially displaced relative to each other, and wherein the teeth of each annular stator core member are circumferentially displaced relative to the teeth of each adjacent annular stator core member; wherein the coil is arranged coaxial with the annular stator core members and axially sandwiched between two of the sets of teeth; and wherein the permanent magnets are axially magnetized and axially sandwiched between two of the annular stator core members.

## Description

### Field of the invention

This invention generally relates to flux switching modulated pole machine.

### Background of the invention

Over the years, various electric machine designs such as modulated pole machines, e.g. claw pole machines, Lundell machines and transverse flux machines (TFM) have been proposed. Electric machines using the principles of these machines were disclosed as early as about 1890 by W.M. Mordey and 1910 by Alexandersson and Fessenden. One reason for an increasing interest in such machines is that the design enables a very high torque output compared to other known machine designs.

WO2007/024184 discloses an electrical, rotary machine, which includes a first stator core section being substantially circular and including a plurality of teeth, a second stator core section being substantially circular and including a plurality of teeth, a coil arranged between the first and second circular stator core sections, and a rotor including a plurality of permanent magnets. The first stator core section, the second stator core section, the coil and the rotor are encircling a common geometric axis, and the plurality of teeth of the first stator core section and the second stator core section are arranged to protrude towards the rotor. Additionally the teeth of the second stator core section are circumferentially displaced in relation to the teeth of the first stator core section, and the permanent magnets in the rotor are separated in the circumferential direction from each other by axially extending pole pieces made from soft magnetic material.

One of the drawbacks of prior art transverse flux modulated pole machines is that they are typically relatively expensive to manufacture. In particular, the rotor of such machines has a relatively complicated structure comprising a large number of permanent magnets.

More recently, Jianhu Yan et al., "Magnetic Field Analysis of a Novel Flux Switching Transverse Flux Permanent Magnet Wind Generator with 3-D FEM" International Conference on Power Electronics and Drive Systems, 2009, p. 332-335, described a transverse flux permanent magnet machine for use in wind generators, where the permanent magnets are located in the stator rather than the rotor. In particular, such a machine has been described as being promising for application to large-scale low speed wind power generation because of its higher space utilization compared with the conventional Transverse flux permanent magnet machines.

However, the stator of this prior art machine still requires a large number of components.

A similar machine is also disclosed in "Novel Linear Flux-Switching Permanent Magnet Machines" by Z.Q. Zhu et al., International Conference on electrical machines and systems 2008, pp. 2948 - 2953.

It is generally desirable to provide a modulated pole machine that is relatively inexpensive in production and assembly. It is further desirable to provide a machine that has good performance parameters, such as one or more of the following: high structural stability, low magnetic reluctance, efficient flux path guidance, low weight, small size, high volume specific performance, etc. It is further desirable to provide components for such a machine.

### Summary

According to a first aspect, disclosed herein is a stator for a flux switching modulated pole machine, the stator comprising a stator core, a coil, and at least two magnets. The stator core comprises at least four coaxial annular stator core members, each comprising a respective set of radially protruding teeth, the teeth of each annular stator core member being distributed along a circumferential direction, wherein the annular stator core members are axially displaced relative to each other, and wherein the teeth of each annular stator core member are circumferentially displaced relative to the teeth of each adjacent annular stator core member. The coil is arranged coaxial with the annular stator core members and axially sandwiched between two of the sets of teeth. Each of the magnets is axially magnetized and axially sandwiched between two of the annular stator core members.

Hence, disclosed herein are embodiments of a stator for a modulated pole machine that does not require many components and whose components can be efficiently produced.

The annular core members define an axis and corresponding radial and circumferential directions. The stator core members, the coil and the rotor encircle a common geometric axis. In a rotary machine the transverse direction is an axial direction of the machine, and the direction of motion is a circumferential direction of the machine.

Each magnet may be a permanent magnet or an electromagnet. In some embodiments, each magnet is an annular permanent magnet, magnetized in the axial direction, and arranged coaxially with the stator core members. Consequently, only a small number of permanent magnets are required, thus also simplifying the assembly of the machine as the assembly and mounting of a large number of permanent magnets may be a cumbersome process. For example, the permanent magnets may be made from NdFeB or ferrite. Furthermore when the permanent magnets are formed as rings, a high performance may be achieved. Alternatively, instead of a ring-shaped permanent magnet, a plurality of arc shaped permanent magnets may be used.

In some embodiments, a first one of the magnets is sandwiched between a first and a second one of the stator core members, a second one of the magnets is sandwiched between a third and a fourth one of the stator core members and the coil is sandwiched between the second and third stator core members. Hence the stator core members are axially stacked and each pair of stator core members is separated by either a magnet or a coil such that the magnets and the coils form an alternating sequence.

The stator core may be manufactured from a number of separate components. For example, some or each of the stator core members may be formed as respective stator core components separate from the other stator core members. The individual components may thus be conveniently manufactured, e.g. by a P/M process.

Each stator core member may comprise an annular stator core back and a set of teeth radially extending from the stator core back towards the rotor, wherein the stator core back provides a radial and axial flux path between allowing efficient communication of magnetic flux between the respective teeth of the stator core member and other components of the stator that are axially adjacent to the stator core member, in particular one of the magnets or another one of the stator core members, e.g. via a suitable axial flux bridge connecting the two stator core members. The magnets may thus be radially aligned with the stator core back. For example, each stator core back may define an inner circumference having an inner radius, and an outer circumference having an outer radius, and each permanent magnet may radially extend beween the inner and outer radius.

The teeth of two adjacent stator core members form respective circumferential rows of teeth where the rows are axially spaced apart and separated by a circumferentially extending gap. The coil is sandwiched between one such pair of stator core members accommodated in the circumferentially extending gap between their respective rows of teeth. The coil winding may have a radial thickness corresponding to the radial dimension of the teeth. The coil winding may radially extend from a root portion of the teeth, i.e. from an outer circumference of the stator core back, to a tip portion of the teeth. It will be appreciated, however, that it may be desirable to have the tip portion of the teeth to extend slightly radially further outward than the coil so as to provide a well-defined air gap between the tip portion of the teeth and the rotor and to avoid the coil to interfere with the movement of the rotor.

In some embodiments, the stator core comprises a flux bridge connecting the stator core members between which the coil is sandwiched. The flux bridge is operable to provide at least an axial magnetic flux path between said stator core members and, in particular between the stator core backs of the respective stator core members.

The flux bridge may be provided as a separate component, e.g. an annular component separate from and sandwiched between the stator core members, or it may be integrated into one or both of the stator core members. To this end, a stator core member may further comprise a bridge section, e.g. in the form of an annular flange axially extending from the stator core back, that provides an axial flux path towards another stator core member. The core back and the bridge section may thus provide a flux path between teeth of the respective stator core members. The bridge section of one stator core member may abut the core back of the adjacent stator core member. Alternatively both adjacent stator core members may each comprise a bridge section such that their bridge sections project towards and abut each other.

In some embodiments, the stator is a stator for a multi-phase machine having n phases (n being an integer larger than 1, e.g. n=3) where the stator comprises n coils, (n+1) magnets and where the stator core comprises 2(n+1) stator core members. The elements of the stator may be axially arranged such that a magnet or a coil is sandwiched between each pair of adjacent stator core members so as to form an alternating axial sequence of magnets and coils sandwiched between stator core members. The stator core members define an axial sequence including two peripheral stator core members and 2n inner stator core members. The teeth of the stator core members may all have the same shape and axial dimension. The axial spacing between neighboring sets of teeth may depend on the axial dimensions of the magnets and coils, respectively.

In some embodiments, the stator is for a 3-phase machine and comprises three coils and four magnets and wherein the stator core comprises eight coaxial annular stator core members, each comprising a respective set of N radially protruding teeth, N being an integer number larger than 1. The coil is arranged coaxial with the annular stator core members and axially sandwiched between two of the sets of teeth; the magnets are axially magnetized and axially sandwiched between two of the annular stator core members. There are now 4 stator core members in an embodiment of a single phase and 8 stator core members in an embodiment of a three phase stator. The sets of teeth of the stator core members between which a magnet is sandwiched are circumferentially displaced relative to each other by a (mechanical) angle of 120°/N; and the sets of teeth of the stator core members between which a coil is sandwiched are circumferentially displaced relative to each other by a (mechanical) angle of 180°/N. Hence, in a single phase, two sets of teeth are at 0 electrical degrees, and the other two sets are shifted, in this case by 180 electrical degrees.

Embodiments of the multi-phase stator thus utilize mutual flux paths rather than three separate phases, as most of the stator core members contribute to two phases. Indeed all inner stator core members provide flux paths to two phases.

Embodiments of the resulting three-phase machine provide continuous torque and a balanced three-phase induced voltage.

In some embodiments, the stator comprises permanent magnets and additional coils coaxial with stator core members and arranged at the axial positions of the permanent magnets, i.e. each additional coil is sandwiched between the same pair of stator core members as one of the permanent magnets. For example, the additional coil may encircle the permanent magnet. A DC current fed through these additional coils reinforces the magnetic flux from the permanent magnets, thus increasing the torque produced for the same volume. Optionally, when it is desirable to reduce the flux, e.g. at high speeds, instead of applying a current to cancel magnetic flux, the current in the additional, flux reinforcing coils can be reduced or even turned off, thus providing a more efficient machine.

The present invention relates to different aspects including the stator described above and in the following, and corresponding methods, devices, and/or product means, each yielding one or more of the benefits and advantages described in connection with the first mentioned aspect, and each having one or more embodiments corresponding to the embodiments described in connection with the first mentioned aspect and/or disclosed in the appended claims. In particular the present invention relates to a flux switching modulated pole machine comprising a stator as disclosed herein and a rotor. Embodiments of the rotor do not comprise any permanent magnets but a plurality of flux conductors, or poles. In some embodiments, the rotor comprises a plurality of axially extending rotor pole pieces arranged side-by-side to form a tubular rotor. Each rotor pole piece may be an elongated rod having a longitudinal axis extending in the axial direction of the rotor. The rotor pole pieces may extend axially across all stator core members. The machine may be a p-pole machine wherein the rotor comprises 2p axially extending rotor pole pieces. Similarly, each stator core member may comprise p/2 teeth. Hence, the rotor structure is simple and does not require a large number of different types of components, nor does it require the assembly of a large number of permanent magnets as in prior art modulated pole machines. Moreover, embodiments of the rotor structure are mechanically stable and robust.

Hence, as the rotor does not comprise any permanent magnets or coils, embodiments of the machine described herein may also be referred to as a passive rotor machine.

Embodiments of the stator core and/or the rotor described herein are well-suited for production by Powder Metallurgy (P/M) production methods. Accordingly, in some embodiments, the stator core members and/or the rotor pole pieces are made from a soft magnetic material such as compacted soft magnetic powder, thereby simplifying the manufacturing of the stator core and/or rotor components and providing an effective three-dimensional flux path in the soft magnetic material allowing e.g. radial, axial and circumferential flux path components in a stator core and/or rotor.

Here and in the following, the term soft magnetic is intended to refer to a material property of a material that can be magnetized but does not tend to stay magnetized when the magnetizing field is removed. Generally, a material may be described as soft magnetic when its coercivity is no larger than 1kA/m (see e.g. "Introduction to Magnetism and Magnetic materials", David Jiles, First Edition 1991 ISBN 0 412 38630 5 (HB), page 74).

The term "soft magnetic composites" (SMC) as used herein is intended to refer to pressed/compacted and heat-treated metal powder components with three-dimensional (3D) magnetic properties. SMC components are typically composed of surface-insulated iron powder particles that are compacted to form, in a single step, uniform isotropic components that may have complex shapes.

The soft magnetic powder may e.g. be a soft magnetic iron powder or powder containing Co or Ni or alloys containing parts of the same. The soft magnetic powder may be a substantially pure water atomized iron powder or a sponge iron powder having irregularly shaped particles which have been coated with an electrical insulation. In this context, the term "substantially pure" means that the powder should be substantially free from inclusions and that the amount of the impurities such as O, C and N should be kept at a minimum. The weight-based average particle sizes may generally be below 300 µm and above 10 µm.

However, any soft magnetic metal powder or metal alloy powder may be used as long as the soft magnetic properties are sufficient and that the powder is suitable for die compaction.

The electrical insulation of the powder particles may be made of an inorganic material. Especially suitable are the type of insulation disclosed in US 6348265 (which is hereby incorporated by reference), which concerns particles of a base powder consisting of essentially pure iron having an insulating oxygen- and phosphorus-containing barrier. Powders having insulated particles are available as Somaloy® 500, Somaloy® 550 or Somaloy® 700 available from Höganäs AB, Sweden.

The shaping of the rotor pole pieces and/or stator core members may thus efficiently be implemented by compacting the rotor pole piece or stator core member from soft magnetic powder in a suitable compacting tool, such as a tool using a so-called shaped die. Alternatively, the rotor pole pieces may be made from laminates, mild steel or another suitable soft magnetic material. Similarly, the stator core members may be made from laminate. The core back section may be made from any suitable soft magnetic and magnetically sufficiently isotropic material, e.g. a soft magnetic powder.

### Brief description of the drawings

The above and/or additional objects, features and advantages of the present invention, will be further elucidated by the following illustrative and non-limiting detailed description of embodiments of the present invention, with reference to the appended drawings, wherein:
Fig. 1 shows an example of a three-phase flux switching modulated pole machine. In particular, fig. 1 a shows a view of the magnetically active components of the machine, while fig. 1 b shows a more detailed view of a two-pole segment of an example of a three-phase flux switching modulated pole machine.
Fig. 2 shows an example of stator core member.
Fig. 3 illustrates the axial arrangement of an example of a stator and rotor with examples of no-load flux linkage paths schematically indicated.
Fig. 4 illustrates an example of a rotor of a flux switching modulated pole machine described herein.
Fig. 5 shows another example of stator core member.

### Detailed description

In the following description, reference is made to the accompanying figures, which show by way of illustration how the invention may be practiced.

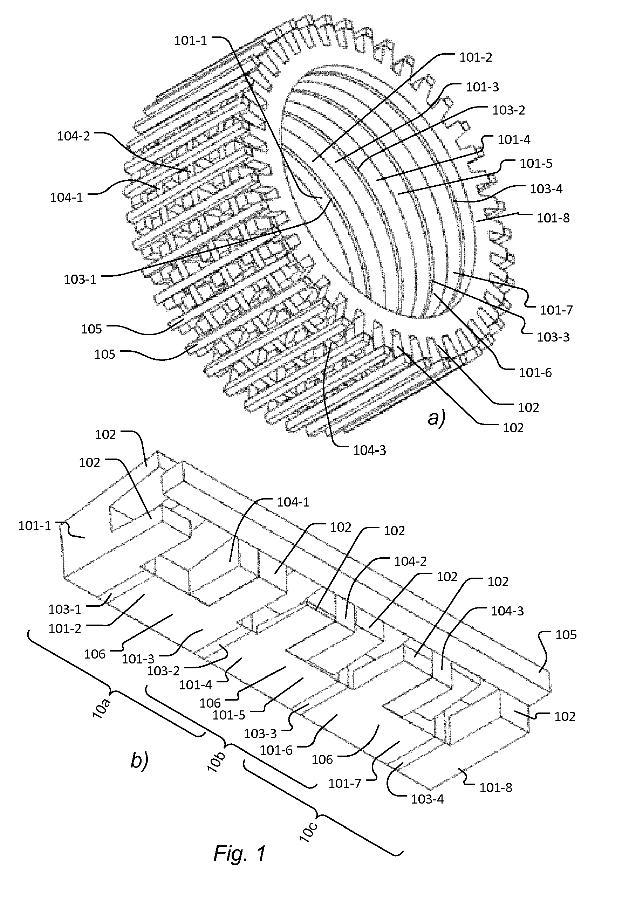

Fig. 1 shows an example of a three-phase flux switching modulated pole machine. In particular, fig. 1 a shows a view of the magnetically active components of the machine, while fig. 1 b shows a more detailed view of a two-pole segment of an example of a three-phase flux switching modulated pole machine.

The machine comprises a stator and a rotor. The stator comprises three stator phase sections 10a, b, c that share some of the stator components.

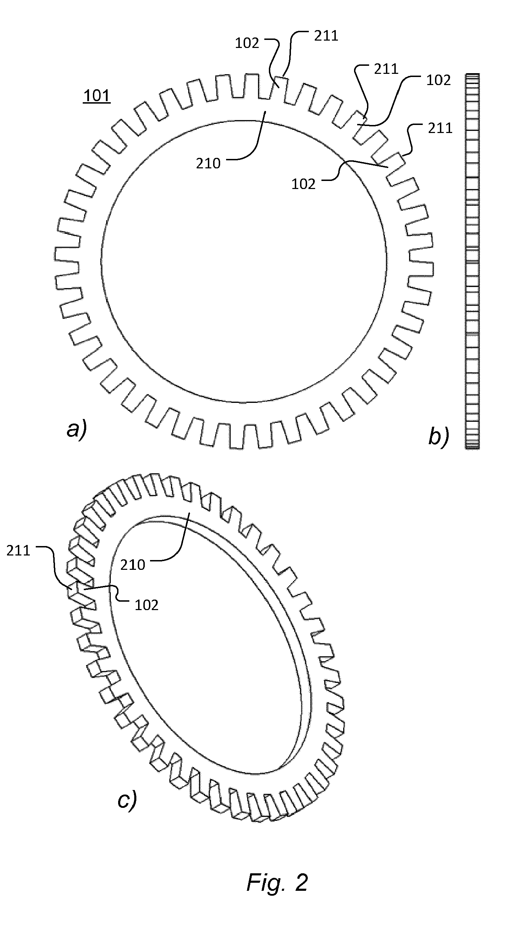

The stator comprises eight annular stator core members 101-1,...,101-8, respectively, each formed as a toothed ring-shaped disk. An example of a stator core member is shown in figure 2. In particular, fig. 2a shows a side view of a stator core member seen from the axial direction, fig. 2b shows a side view of a stator core member seen from the radial direction, and fig. 2c shows a three-dimensional view of a stator core member. The stator core member comprises a ring-shaped stator core back 210 from which a plurality of teeth 102 protrude in the radial direction. In the example of fig. 2, the stator core member 101 comprises 40 teeth corresponding to an 80-pole machine. It will be appreciated, however, that alternative embodiments may comprise a different number of teeth, corresponding to a different number of poles. The teeth 102 are regularly distributed around the circumference of the stator core member 101. In the present example, all teeth have equal shape and size and are equally spaced apart from their respective neighbors. In the example of fig. 2, the stator core member is for an outer-rotor machine where the rotor encircles the stator. Accordingly, the teeth protrude radially outward from the stator core member. It will be appreciated, however, that, in alternative embodiments, a stator core member for an inner-rotor machine may have teeth protruding radially inward from an inner circumference of a ring-shaped core back. In any event, a tip portion of each tooth 102 defines an interface surface 211 facing the rotor and, together with a corresponding interface surface of the rotor, defining the air gap of the machine separating the stator from the rotor. Each of the stator core members may be compacted in one piece by a P/M process. Alternatively, the stator core members may be made from another suitable soft-magnetic material.

Again referring to fig. 1, the eight stator core members are axially stacked along a common axis. All stator core members have the same number of teeth, and the teeth of all stator core members are of equal shape and size and are spaced equally far from their respective neighbors. The stator core members are rotated relative to each other, causing their respective teeth to be circumferentially displaced from the teeth of corresponding other stator core members, i.e. displaced along the circumferential direction defined by the stator core members. Consequently, the teeth of each stator core member are positioned at predetermined angular positions relative to the teeth of the respective adjacent stator core member or members.

The stator comprises four permanent magnets 103-1,..., 103-4, respectively. Each permanent magnet is formed as a disc-shaped ring magnetized in its axial direction. Each permanent magnet is positioned coaxially with the stator core members 101-1,...,101-8 and sandwiched between two neighboring stator core members such that each stator core member is separated from one of its neighbor stator core members by a permanent magnet. The permanent magnets are radially aligned with the core pack portions of the stator core members so as to allow the axial magnetic flux generated by the permanent magnets to enter the core back portions of the stator core members between which the permanent magnet is sandwiched. The orientation of the direction of magnetization alternates from magnet to magnet along the axial direction. In fig. 1 b, the direction of magnetization of each permanent magnet is indicated by an arrow.

The stator further comprises three coils 104-1, 104-2, and 104-3, respectively, each wound around the common axis defined by the stator core members. The coils are sandwiched between stator core members such that either a permanent magnet or a coil is axially sandwiched between each pair of stator core members. The coils are accommodated in a gap formed between the teeth of a pair of adjacent stator core members, i.e. the coils are radially aligned with the teeth 102.

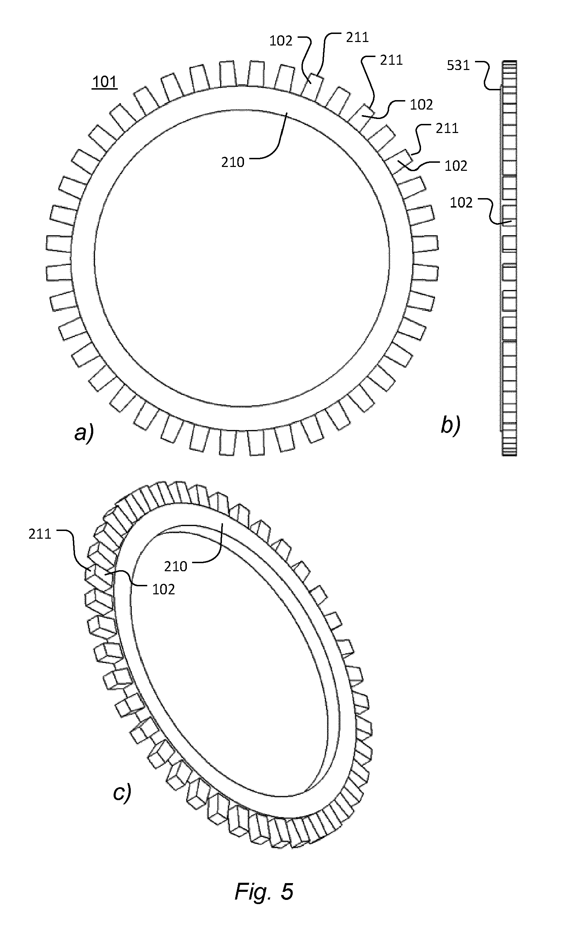

The pairs of stator core members between which a coil is sandwiched are further connected by an annular flux bridge 106 axially connecting the adjacent stator core members and providing an axial flux path between the core back sections of these stator core members. Hence, in the example of fig. 1, each coil encircles a corresponding flux bridge. It will be appreciated, however, that, in an inner-rotor machine the radial arrangement of the components may be inverted, i.e. the flux bridge may encircle the coil. The flux bridge may be formed as a separate component, separate from the stator core members. Alternatively, the flux bridge may be integrated in one of the pair of stator core members it connects, e.g. as an annular flange that axially protrudes from the core back portion of the stator core member and towards the other stator core member of the pair. Yet alternatively, respective parts of the flux bridge may be integrated in each of the stator core members such that the parts together form the flux bridge, e.g. as described in connection with fig. 5. In such an embodiment, the stator core members connected by a flux bridge may have the same shape and size and may thus be conveniently manufactured using a single set of tools.

Hence, in the example of fig. 1, the axial arrangement of the stator components is as follows: Stator core member 101-1, permanent magnet 103-1 axially magnetized in a first orientation, stator core member 101-2, stator core member 101-3, permanent magnet 103-2 axially magnetized in a second orientation, opposite the first orientation, stator core member 101-4, stator core member 101-5, permanent magnet 103-3 axially magnetized in the first orientation, stator core member 101-6, stator core member 101-7, permanent magnet 103-4 axially magnetized in the second orientation, stator core member 101-8.

The three coils 104-1, 104-2, and 104-3 are accommodated between the teeth of stator core members 101-2 and 101-3, between the teeth of stator core members 101-4 and 101-5, and between the teeth of stator core members 101-6 and 101-7, respectively.

Generally, embodiments of the machine described herein require only a relatively small number of components to be manufactured and assembled; in particular, the number of permanent magnets is small.

The angular positions of the teeth of the respective stator core members may be expressed in electrical angles as follows: Stator core member 101-1(240 Degrees), stator core member 101-2 (0 degrees), stator core member 101-3 (180 degrees), stator core member 101-4 (300 degrees), stator core member 101-5 (120 degrees), stator core member 101-6 (240 degrees), stator core member 101-7 (60 degrees), stator core member 101-8 (180 degrees).

Hence, in terms of mechanical degrees, the teeth of two neighboring stator core members are displaced relative to each other by either 120/N degrees or 180/N degrees where N is the number of teeth of each stator core member. In particular, the stator core members separated by a permanent magnet are rotated relative to each other such that their respective teeth are displaced relative to each other by 120/N degrees, while the stator core members that accommodate a coil between them are rotated relative to each other such that their respective teeth are displaced relative to each other by 180/N degrees.

The rotor comprises rotor pole pieces 105 formed as elongated rods arranged side-by-side with their longitudinal axes parallel with each other and parallel with the common axis of the stator core members so as to form a tubular rotor structure. The rotor pole pieces are sized so as to extend axially across all eight stator core members. There is one rotor pole piece per stator pole-pair, meaning a p-pole machine requires p/2 rotor pole pieces. The rotor pole pieces are circumferentially separated by a suitable non-magnetic material such as plastic or aluminum (not explicitly shown, as fig. 1 only shows the magnetically active parts). For example, the rotor pole pieces may be embedded in a tubular support having axially extending channels on its surface facing the stator such that each rotor pole piece is accommodated in one of the channels. The rotor pole pieces may be made from any suitable soft magnetic material, e.g. compacted from soft-magnetic powder by a suitable P/M process.

Hence, an 80-pole, three-phase version of the machine of fig. 1 may be manufactured from 8 stator core members, 3 coils, 4 magnets and 40 rotor pole pieces. To illustrate the reduction in number of components, it is interesting to note that an 80-pole version of the prior art machine proposed in the paper "Novel Linear Flux-Switching Permanent Magnet Machines" (ibid.) would require 480 magnets, 240 stator U sections, 480 stator return sections, 3 coils and 240 rotor pole pieces.

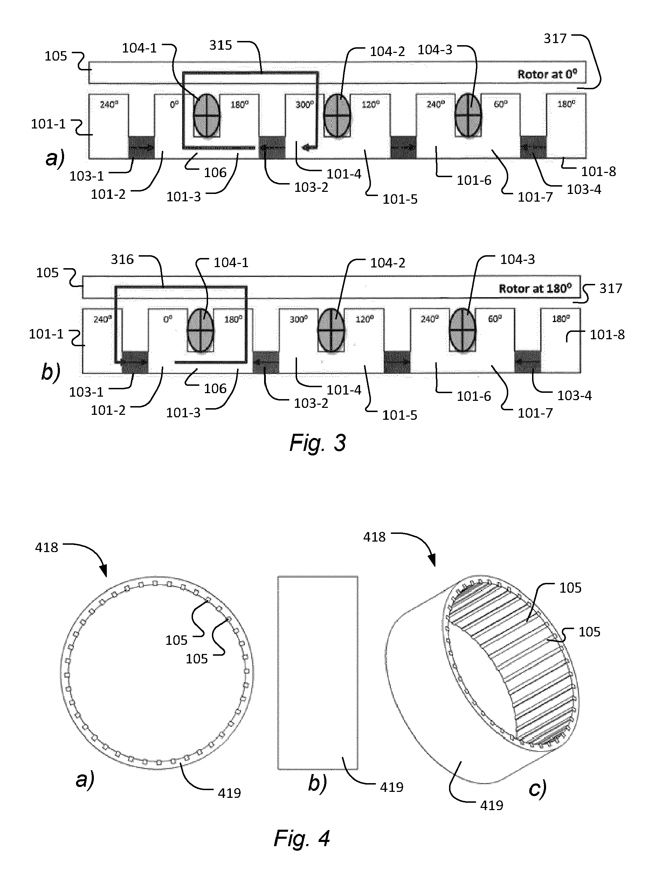

Fig. 3 illustrates the axial arrangement of an example of a stator and rotor with examples of no-load flux linkage paths schematically indicated. In particular, fig. 3 illustrates how an example of a three phase flux switching modulated pole machine uses mutual flux paths, rather than three separate phases so as to provide continuous torque and a balanced three-phase induced voltage. Fig. 3 shows a partial cross section of the machine of fig. 1 illustrating a rotor pole piece 101 and a part of the stator including stator core members 101-1,...,101-8, permanent magnets, 103-1,...,103-4, and coils 104-1,...,104-3, all as described in connection with fig. 1.

In fig. 3a, the no-load flux of one of the phases for a first angular position of the rotor is schematically illustrated by line 315, while fig. 3b shows the no-load flux of the same phase as line 316 at another angular position of the rotor. In both cases, the illustrated flux encircles coil 104-1.

In fig. 3a, the flux path 315 extends axially from permanent magnet 103-2 through the stator core member 101-3 and flux bridge 106 into stator core member 101-2, where it is directed radially outward through a tooth of stator core member 101-2. The flux then passes the air gap 317 into rotor pole piece 105 where the flux moves axially to the axial position of stator core member 101-4. At the axial position of stator core member 101-4, the flux moves radially inward, crossing the air gap 317, into a tooth of stator core member 101-4 and onward into the core back of stator core member. From there, the flux returns axially into permanent magnet 103-2.

In fig. 3b, the flux path 316 extends axially from permanent magnet 103-1 through the stator core member 101-2 and flux bridge 106 into stator core member 101-3, where it is directed radially outward through a tooth of stator core member 101-3. The flux then passes the air gap 317 into rotor pole piece 105 where the flux moves axially to the axial position of stator core member 101-1. At the axial position of stator core member 101-1, the flux moves radially inward, crossing the air gap 317, into a tooth of stator core member 101-1 and onward into the core back of stator core member. From there, the flux returns axially into permanent magnet 103-1.

As can be seen, the magnetic polarity of the rotor pole pieces alternates with angular position once per stator pole. Furthermore, the angular position of the rotor pole piece defines the direction of flux linkage around each of the three coils. The angular position of the stator teeth, combined with the arrangement of the stator-mounted permanent magnets ensure the machine is balanced for 3-phase operation and produces continuous torque when supplied with 3-phase variable-frequency AC.

Fig. 4 illustrates an example of a rotor for a flux switching modulated pole machine described herein. In particular, fig. 4a shows a side view of a rotor seen from the axial direction, fig. 4b shows a side view of a rotor seen from the radial direction, and fig. 4c shows a three-dimensional view of a rotor. The rotor, generally designated 418, comprises rotor pole pieces 105 formed as elongated rods arranged side-by-side with their longitudinal axes parallel with each other and parallel with the common axis of the rotor so as to form a tubular rotor structure. The rotor pole pieces 105 are sized so as to extend axially across the entire rotor structure. The rotor pole pieces may be made from a suitable soft-magnetic material, e.g. by a P/M process from a soft-magnetic powder. The rotor further comprises a generally tubular support structure 419 made from a suitable non-magnetic material such as plastic or aluminum. The tubular support structure comprises axially extending channels on one of its cylindrical surfaces such that each rotor pole piece is accommodated in one of the channels. In the example of fig. 4, the rotor is for an outer-rotor machine and the channels accommodating the rotor pole pieces are arranged in the inner surface of the tube. In a rotor for an inner-rotor machine, the rotor pole pieces may be arranged on the outer surface of a tubular support structure or of a cylindrical structure.

Fig. 5 shows another example of stator core member. In particular, fig. 5a shows a side view of a stator core member seen from the axial direction, fig. 5b shows a side view of a stator core member seen from the radial direction, and fig. 5c shows a three-dimensional view of a stator core member. The stator core member of fig. 5 is similar to the stator core member of fig. 2 in that it comprises a ring-shaped stator core back 210 from which a plurality of teeth 102 protrude in the radial direction. In the example of fig. 5, the stator core member 101 comprises 40 teeth corresponding to an 80-pole machine. It will be appreciated, however, that alternative embodiments may comprise a different number of teeth, corresponding to a different number of poles. The teeth 102 are regularly distributed around the circumference of the stator core member 101. In the present example, all teeth have equal shape and size and are equally spaced apart from their respective neighbors. In the example of fig. 5, the stator core member is for an outer-rotor machine where the rotor encircles the stator. Accordingly, the teeth protrude radially outward from the stator core member. It will be appreciated, however, that, in alternative embodiments, a stator core member for an inner-rotor machine may have teeth protruding radially inward from an inner circumference of a ring-shaped core back. In any event, a tip portion of each tooth 102 defines an interface surface 211 facing the rotor and, together with a corresponding interface surface of the rotor, defining the air gap of the machine separating the stator from the rotor. Each of the stator core members may be compacted in one piece by a P/M process. The stator core member further comprises an annular flange 531 that axially protrudes from the core back portion of the stator core member. Hence, when two stator core members of the type shown in fig. 5 are placed side by side with their respective flanges abutting each other, a pair of toothed rings is provided where the rings are connected by an annular flux bridge while the respective teeth define a gap allowing a coil to be wound inside the gap such that the coil is axially sandwiched by the respective rows of teeth.

In the above, embodiments of a three-phase machine have been described. In some embodiments, a single-phase flux switching modulated pole machine may be provided. An example of a single-phase machine comprises four stator core members, two permanent magnets, and a single coil corresponding to the stator core members, permanent magnets and coil of one phase of the machine of fig. 1.

Although some embodiments have been described and shown in detail, the invention is not restricted to them, but may also be embodied in other ways within the scope of the subject matter defined in the following claims. In particular, it is to be understood that other embodiments may be utilized, and that structural and functional modifications may be made without departing from the scope of the present invention.

Embodiments of the invention disclosed herein may be used for a direct wheel drive motor for an electric-bicycle or other electrically driven vehicle, in particular a lightweight vehicle. Such applications may impose demands on high torque, relatively low speed and low cost. These demands may be fulfilled by a motor with a relatively high pole number in a compact geometry using a small volume of permanent magnets to fit and to meet cost demands by the enhanced rotor assembly routine. Moreover, embodiments of the stator and machine disclosed herein may be used in applications where prior art modulated pole machines have been used, such as large vehicles/traction applications, wind power generation, turbines, renewable energy generation, mixers, stepper/positioning motors, etc., in particular applications where a high torque at a low rotational speed is desirable.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A stator for a flux switching modulated pole machine, the stator comprising a stator core, a coil, and at least two magnets, the stator core comprising at least four coaxial annular stator core members, each comprising a respective set of radially protruding teeth, the teeth of each annular stator core member being distributed along a circumferential direction, wherein the annular stator core members are axially displaced relative to each other, and wherein the teeth of each annular stator core member are circumferentially displaced relative to the teeth of each adjacent annular stator core member; wherein the coil is arranged coaxial with the annular stator core members and axially sandwiched between two of the sets of teeth; and wherein the magnets are axially magnetized and axially sandwiched between two of the annular stator core members.

2. A stator according to claim 1, wherein each magnet is an annular permanent magnet arranged coaxial with the stator core members.

3. A stator according to anyone of the preceding claims, wherein a first one of the magnets is sandwiched between a first and a second one of the stator core members, a second one of the magnets is sandwiched between a third and a fourth one of the stator core member, and the coil is sandwiched between the second and third stator core members.

4. A stator according to any one of the preceding claims, wherein one or more of the stator core members are formed as respective stator core components separate from the other stator core members.

5. A stator according to any one of the preceding claims, comprising a flux bridge connecting the stator core members between which the coil is sandwiched, the flux bridge being operable to provide at least an axial magnetic flux path between said stator core members.

6. A stator according to any one of the preceding claims, wherein the stator is a stator for a multi-phase machine comprising n phases; wherein the stator comprises n coils, (n+1) magnets and wherein the stator core comprises 2(n+1) stator core members.

7. A stator according to claim 6, wherein, between each pair of adjacent stator core members, a magnet or a core is sandwiched so as to form an alternating axial sequence of magnets and coils sandwiched between stator core members.

8. A stator according to claim 6 or 7, wherein the stator is for a 3-phase machine and comprises three coils and four magnets; wherein the stator core comprises eight coaxial annular stator core members, each comprising a respective set of N radially protruding teeth, N being an integer number larger than 1; wherein the coil is arranged coaxial with the annular stator core members and axially sandwiched between two of the sets of teeth; and wherein the magnets are axially magnetized and axially sandwiched between two of the annular stator core members; wherein the sets of teeth of the stator core members between which a magnet is sandwiched are circumferentially displaced relative to each other by an angle of 120°/N; and wherein the sets of teeth of the stator core members between which a coil is sandwiched are circumferentially displaced relative to each other by an angle of 180°/N.

9. A stator according to any one of the preceding claims, wherein the stator core members made of compacted soft-magnetic powder.

10. A stator according to any one of the preceding claims, comprising additional coils coaxial with stator core members and arranged at the axial positions of the magnets.

11. A flux switching modulated pole machine comprising a stator as defined in any of the preceding claims and a rotor.

12. A flux switching modulated pole machine according to claim 11, wherein the rotor comprises a plurality of axially extending rotor pole pieces arranged side-by-side to form a tubular rotor.

13. A flux switching modulated pole machine according to claim 12, wherein the machine is a p-pole machine; and wherein the rotor comprises 2p axially extending rotor pole pieces.

14. A flux switching modulated pole machine according to any one of claims 11 through 13, wherein the rotor pole pieces are made of compacted soft-magnetic powder.
